# FASCICULE DE BREVET EUROPEEN

(11) **EP 0 864 896 B1**
(45) Date de publication et mention de la délivrance du brevet: **07.09.2005**
(21) Numéro de dépôt: 98400542.1
(22) Date de dépôt: 09.03.1998
(51) Int. Cl.: G02B 6/44

(54) **Unité optique pour câble à fibres optiques**
Optische Einheit für ein Faseroptischeskabel
Optical unit for fibre optical cable

(30) Priorité: 10.03.1997 FR 9702790; 17.07.1997 FR 9709073
(43) Date de publication de la demande: 16.09.1998
(73) Titulaire: ALCATEL, 75008 Paris (FR)
(72) Inventeur: Bonicel, Jean-Pierre, 92500 Rueil Malmaison (FR); Elisson, Peter, Hickory, NC 28601 (US); Tatat, Olivier, 78800 Houilles (FR); Gunnarsson, Magnus, 51470 Grimsas (FR)
(74) Mandataire: Blokland, Arie

(56) Documents cités:
- EP-A- 0 321 788
- EP-A- 0 769 711
- DE-U- 29 502 851
- DE-U- 29 619 549
- FR-A- 2 280 911
- FR-A- 2 747 201

## Description

L'invention concerne une unité optique pour câble à fibres optiques, généralement utilisée en télécommunications, ladite unité comprenant une pluralité de fibres optiques regroupées dans une gaine, et éventuellement assemblées en un ou plusieurs rubans à l'intérieur de la gaine. Elle concerne plus particulièrement le matériau de la gaine d'une telle unité contenant les fibres optiques.

Un câble comprenant une telle unité optique est utilisé dans le domaine des télécommunications, et notamment dans la distribution à fortes ramifications, où plusieurs de ces câbles sont assemblés pour former, au départ du réseau de distribution, un macro-câble à forte densité de fibres optiques.

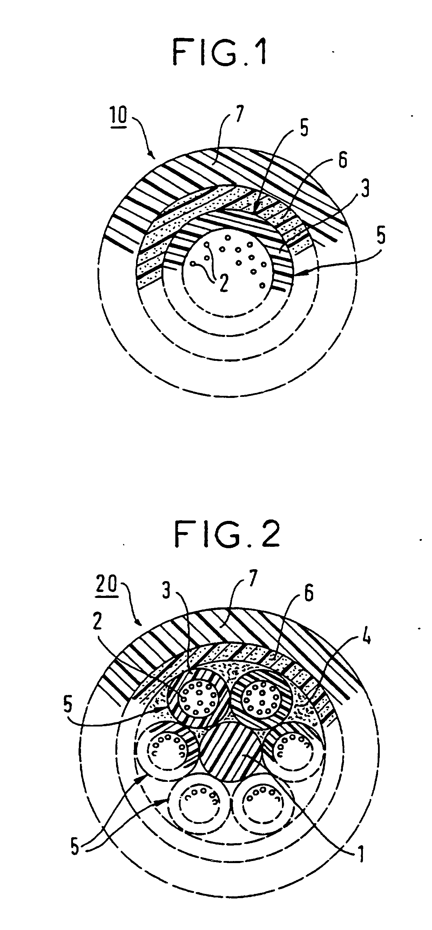

Les figures 1 et 2 montrent en coupe transversale deux câbles connus respectivement à structure dite Unitube® (figure 1) et à structure dite "stranded loose tube" (figure 2). Un câble connu de structure "stranded loose tube" est décrit par exemple dans le document FR-A-2 280 911.

Les câbles à fibres optiques 10 et 20 comprennent des fibres optiques 2 sous forme de faisceaux ou de rubans, logées librement dans une gaine en forme de tube 3 dont l'axe longitudinal est celui du câble (structure Unitube®) ou dans plusieurs gaines 3 enroulées autour d'un élément de renfort central 1 en un matériau diélectrique (structure "stranded loose tube"). Une unité optique 5 comprend une gaine 3 et la ou les fibres optiques 2 qu'il contient.

Autour de l'unité 5 du câble 10 à structure Unitube® ou de l'ensemble des unités 5 du câble 20 à structure "stranded loose tube" sont disposées successivement une couche de renfort mécanique 6 constituée par exemple d'éléments de renfort diélectriques et une gaine extérieure de protection 7 en un matériau isolant. En outre, l'espace libre entre les unités 5 du câble 20 peut être rempli d'un matériau de remplissage, par exemple un gel de remplissage 4, assurant l'étanchéité longitudinale ou contenir des éléments gonflant en présence de liquide pour assurer cette étanchéité.

La ou les gaines 3 des unités 5 contenant les fibres optiques 2 sont, de manière connue, en un matériau dur et rigide, tel que le polyéthylène haute densité (PEHD) ou le polybutylène téréphtalate (PBT) ; elles peuvent également être constituées d'une double couche polybutylène téréphtalate/polycarbonate (PBT/PC). Selon le document FR-2 280911, les gaines ayant forme de tubes de la structure "stranded loose tube" peuvent également être en polyéthylène ou en polypropylène.

Le module d'Young du matériau constituant les gaines 3 dans les câbles connus 10 ou 20 est en général élevé, de l'ordre de 2400 à 2600 MPa à 20°C. De telles gaines confèrent une bonne protection mécanique aux fibres optiques 2, notamment contre les efforts de compression radiaux. Lorsque ce module d'Young est plus faible, les gaines en forme de tubes faites avec un tel matériau doivent avoir une épaisseur assez importante pour assurer au câble une bonne résistance à la compression radiale. Dans ce cas, l'épaisseur des gaines 3 est relativement importante (typiquement de l'ordre de 0,5 mm pour les structures "stranded loose tube" et 0,75 mm pour les structures Unitube®). Ainsi, les câbles 10 ou 20 obtenus sont soit très encombrants, soit rigides, soit les deux à la fois, et en conséquence difficiles à manipuler.

C'est pourquoi la demande de brevet européen EP-A-0.769.711 propose d'utiliser des matériaux souples et élastiques pour la gaine de la ou des unités de fibres optiques ; elle propose en particulier une unité optique pour un câble de télécommunications à fibres optiques, comprenant une gaine sous forme de tube en un matériau plastique dans lequel est logée librement au moins une fibre optique, caractérisée en ce que ladite gaine a une épaisseur inférieure ou égale à 0,5 mm et en ce que ledit matériau a un module d'Young inférieur à 1500 MPa à 20°C et une courbe contrainte/allongement sans seuil d'écoulement. Un tel matériau permet la réalisation de câbles moins encombrants et plus faciles à manipuler que ceux de l'art antérieur cités précédemment.

D'autre part, le confinement des fibres optiques dans la gaine pose un problème d'augmentation d'atténuation par microcourbures. Sous l'effet d'une contrainte extérieure, d'origine mécanique ou thermique, la gaine doit pouvoir se déformer afin de ne pas générer de microcourbures sur les fibres optiques serrées à l'intérieur de la gaine.

Le raccordement du câble comprenant une telle unité optique pose également un problème de découpe de la gaine. La découpe doit être aisée et sans risque d'endommagement pour les fibres optiques serrées à l'intérieur de la gaine.

Le but de l'invention est de fournir une unité optique pour câble à fibres optiques comprenant une pluralité de fibres optiques éventuellement assemblées en un ou plusieurs rubans, regroupées dans une gaine, comprenant principalement un seul matériau. La fabrication d'un tel câble est simplifiée et d'un coût moindre, et la gaine possède une performance optique, une tenue mécanique et une facilité d'accès aux fibres optiques améliorées.

A cet effet, l'invention a pour objet une unité optique pour câble à fibres optiques, généralement utilisé en télécommunications, laidte unité comprenant une pluralité de fibres optiques regroupées dans une gaine, et éventuellement assemblées en un ou plusieurs rubans à l'intérieur de la gaine, caractérisée en ce que la gaine présente, à une température d'environ +20 degrés Celsius, un module d'Young inférieur à 200 MPa et une dureté inférieure à 90 unités Shore A, et à une température d'environ -40 degrés Celsius, un module d'Young inférieur à 2000 MPa.

Les fibres sont regroupées dans la gaine, ce qui est avantageux en particulier en terme de volume gagné sur la taille de l'unité optique par rapport à la situation de l'art antérieur où elles sont libres dans la gaine. La gaine est donc très proche des fibres optiques qui sont éventuellement assemblées en un ou plusieurs rubans à l'intérieur de la gaine. Ainsi la gaine peut être en contact, de préférence pratiquement sans adhésion, avec les fibres optiques ou le(s) ruban(s) de fibres optiques qu'elle regroupe. Mais la gaine peut aussi être à une distance des fibres optiques ou du (des) ruban(s) de fibres optiques pouvant aller jusqu'à 0,1 mm.

L'unité optique selon l'invention peut éventuellement comprendre un matériau de remplissage tel qu'un gel de remplissage comprenant des graisses, généralement basé sur des huiles le plus souvent à base de silicones ou de polyalphaoléfines.

Des tests ont permis de montrer que la performance optique de l'unité optique selon l'invention est corrélée avec la souplesse du matériau constitutif de la gaine.

Un premier test de la performance optique a consisté à mesurer l'augmentation d'atténuation d'une fibre de l'unité, par rapport à sa valeur d'atténuation à l'état libre.

Un deuxième test de performance optique a consisté à mesurer la variation d'atténuation d'une fibre optique de l'unité, en fonction d'une variation de température. L'excursion de température est comprise entre -40 degrés Celsius et +70 degrés Celsius, pour simuler les écarts de température réels auxquels sont soumis les câbles de télécommunications comprenant de telles unités dans les réseaux de distribution.

Différents matériaux ont été testés, généralement polymères, parmi lesquels des polymères thermoplastiques tel qu'un polychlorure de vinyle (PVC), et des élastomères.

Une corrélation a ensuite été établie entre les valeurs d'atténuation de l'unité testée avec un de ces matériaux constituant la gaine, et le module d'Young de ce matériau, mesuré séparément. A partir d'un critère d'atténuation, il a été possible de définir deux seuils supérieurs du module d'Young en fonction de la température : 200 MPa, à une température d'environ +20 degrés Celsius, et 2000 MPa, à une température d'environ -40 degrés Celsius.

Ainsi, l'unité optique selon l'invention comprend une gaine à laquelle le module d'Young confère une souplesse capable de réduire, en se déformant sous l'action d'une contrainte, l'effet d'atténuation par microcourbures des fibres optiques regroupées dans la gaine.

D'autres tests ont montré que la facilité d'ouverture de la gaine de l'unité optique selon l'invention, est corrélée avec la dureté du matériau constitutif de la gaine.

Ainsi, des tests ont été effectués sur les mêmes matériaux que les précédents, dans lesquels la gaine est découpée à l'aide d'un outil de découpe. Une corrélation a été établie entre la facilité d'ouverture de la gaine de l'unité optique, et la dureté du matériau constitutif de la gaine, mesurée séparément. A partir d'un critère de facilité d'ouverture de la gaine, il a été possible de définir un seuil supérieur de dureté du matériau constitutif de la gaine : 90 unités Shore A, à une température d'environ +20 degrés Celsius. Ainsi, une gaine constituée d'un matériau dont le module d'Young et la dureté sont inférieurs aux seuils supérieurs établis expérimentalement à l'aide des tests précédents, confère au câble selon l'invention une performance optique et une facilité d'accès aux fibres optiques améliorées.

L'unité optique selon l'invention possède généralement une variation d'atténuation à une longueur d'onde de 1550 nm égale à plus ou moins 0,1 dB / km.

D'autres caractéristiques et avantages de la présente invention apparaîtront plus clairement à la lecture de la description suivante, en référence aux dessins annexés correspondants, dans lesquels :
- la figure 1 montre schématiquement en coupe partielle un câble à structure Unitube® de l'art antérieur,
- la figure 2 montre schématiquement en coupe partielle un câble à structure "stranded loose tube" de l'art antérieur,
- la figure 3 montre très schématiquement une vue en coupe transversale d'une unité optique selon un premier mode de réalisation de l'invention,
- la figure 4 montre très schématiquement une vue en coupe transversale d'une unité optique selon un deuxième mode de réalisation de l'invention, et
- la figure 5 compare l'effet de la température sur l'atténuation de fibres logées dans deux unités optiques dont l'une est conforme à l'invention selon le premier mode de réalisation de l'invention.

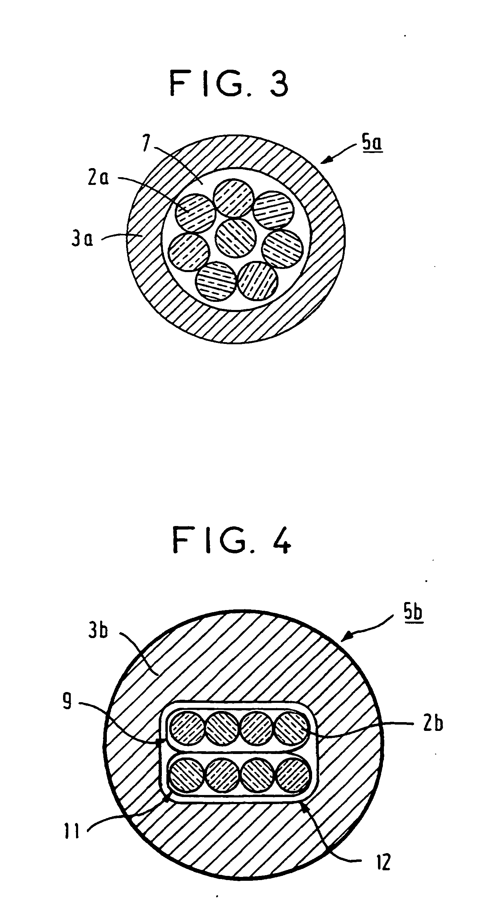

Dans toutes ces figures, les éléments communs portent les mêmes numéros de référence. Les unités optiques des figures 3 et 4 sont destinées à être insérées dans des câbles à fibres optiques tels que ceux des figures 1 et 2, à la place des unités optiques 3 décrites dans les figures 1 et 2.

Les figures 1 et 2 ont été décrites en relation avec l'état de la technique.

Sur la figure 3, l'unité optique comprend une pluralité de fibres optiques, regroupées dans une gaine 3a. Une unité optique 5a est représenté avec 8 fibres optiques 2a, regroupées dans une gaine 3a du type d'un microtube monté très proche des fibres optiques. Un matériau de remplissage 7, tel qu'un gel de remplissage connu de l'homme du métier, est présent autour des fibres optiques 2a à l'intérieur de la gaine 3a.

A titre d'exemple, l'unité optique 5a possède les caractéristiques suivantes :

| | |
|---|---|
| diamètre du câble | 1,2 (mm) |
| épaisseur de la gaine | 0,2 (mm) |
| diamètres des fibres optiques | 0,250 (mm) |
| nombre de fibres optiques | 8 |

L'unité optique la objet du premier mode de réalisation de l'invention est utilisée pour les câbles de télécommunications, de structure de type Unitube® ou de type "stranded loose tube", notamment dans les réseaux de distribution à fortes ramifications, où un assemblage de plusieurs de tels câbles forme un macro-câble à forte densité de fibres optiques.

Selon un deuxième mode de réalisation de l'invention, sur la figure 4, les fibres optiques 2b sont assemblées en deux rubans 9 et 11 ayant 4 fibres optiques chacun. L'unité optique 5b comprend une gaine 3b qui présente dans le plan de coupe transversal de la figure 4 un logement intérieur 12 de forme rectangulaire. Les deux rubans 9 et 11 sont disposés serrés à l'intérieur du logement rectangulaire 12.

L'assemblage en rubans permet un repérage aisé des fibres optiques les unes par rapport aux autres, particulièrement avantageux lors d'opérations de raccordement du câble comprenant ladite unité optique. Il faut noter qu'un ruban unique aussi bien que plusieurs rubans sont envisageables, et que chaque ruban peut comporter 6, 8, ou 12 fibres optiques. Il est aussi possible dans le cadre de la présente invention de combiner le premier et le second mode de réalisation, c'est-à-dire de combiner dans la même unité optique des fibres optiques individuelles et au moins un ruban de fibres optiques.

L'unité optique 5b possède par exemple les caractéristiques suivantes :

| | |
|---|---|
| diamètre du câble | 2,0 (mm) |
| longueur et largeur du logement | 1,2x0,7 (mm) |
| diamètres des fibres optiques | 0,250 (mm) |
| nombre de fibres optiques | 8 |

Le câble comprenant l'unité optique selon l'invention est fabriqué, par exemple, par extrusion. Vers la tête d'une extrudeuse convergent simultanément le matériau constitutif de la gaine, éventuellement un matériau de remplissage du câble, et les fibres optiques ou les rubans de fibres optiques. Le matériau de remplissage est par exemple un gel, pour remplir les interstices existants entre la ou les unités optiques et la gaine du câble, pour protéger le câble de l'humidité ou faciliter le glissement de l'unité optique.

Le câble comprenant l'unité optique selon l'invention peut aussi comporter tout élément tel qu'une couche de protection extérieure (armure, gaine...), ou bien un élément de renfort : FRP en anglais "Fiber Reinforced Plastic", ou fibres de renfort continues, telles que fibres de verre, ou d'aramides enrobées dans une matrice organique thermoplastique ou réticulée, ainsi qu'il est connu de l'homme du métier.

La gaine de l'unité optique selon l'invention est constituée d'un polymère, par exemple un matériau thermoplastique tel qu'un polychlorure de vinyle plastifié. Un élastomère peut également convenir. Le matériau de la gaine possède, à une température d'environ +20 degrés Celsius, un module d'Young inférieur à 200 MPa et une dureté inférieure à 90 unités Shore A, et à une température d'environ -40 degrés Celsius, un module d'Young inférieur à 2000 MPa.

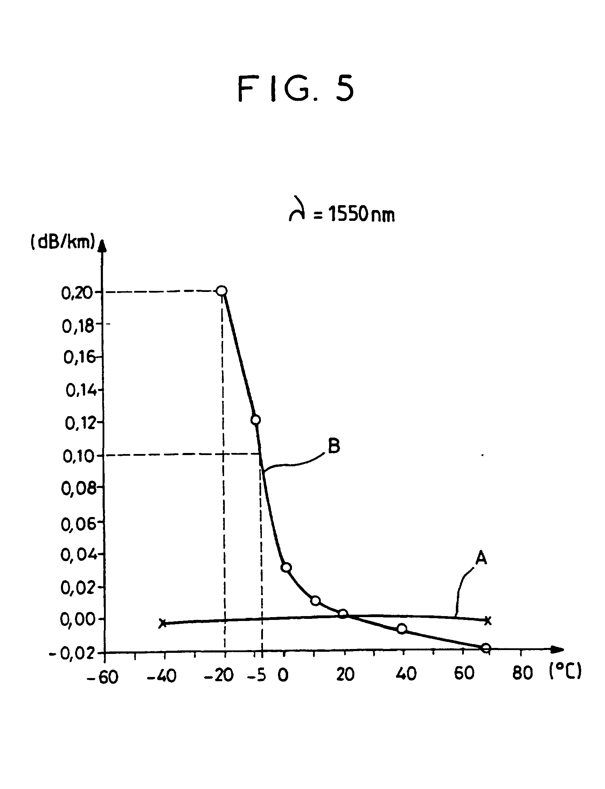

Sur la figure 5 sont rapportées les variations d'atténuation à une longueur d'onde de 1550 nanomètres et en fonction de la température, d'une fibre optique logée dans une unité optique. L'atténuation de référence de la fibre optique est prise à la température de +20 degrés Celsius.

L'unité optique A est constituée d'une gaine conforme à l'invention, en polychlorure de vinyle plastifié dont les caractéristiques sont environ :
- une dureté en unités Shore A de 78 à 20°C
- un module d'Young de 20 MPa à 20°C
- et un module d'Young de 1900 MPa à -40°C.

La gaine de l'unité optique B, copolymère de polypropylène et d'éthylène, possède, à une température d'environ +20 degrés Celsius, un module d'Young voisin de 1200 MPa et une dureté supérieure à 98 unités Shore A (donc hors échelle Shore A), et à une température d'environ -40 degrés Celsius, un module d'Young voisin de 3000 MPa.

Les variations d'atténuation de l'unité optique A satisfont un critère fixé à plus ou moins 0, 10 dB/km, sur toute la plage d'excursion des températures, entre -40 à +70 degrés Celsius. En revanche, l'unité optique B ne peut satisfaire un critère fixé à plus ou moins 0,10 dB/km, que pour des températures comprises entre -5 et +70 degrés Celsius.

## Revendications

1. Unité optique (5a, 5b) pour câble (10, 20) à fibres optiques, ladite unité comprenant une pluralité de fibres optiques (2) regroupées dans une gaine (3a, 3b), **caractérisée en ce que** la gaine présente, à une température d'environ +20 degrés Celsius, un module d'Young inférieur à 200 MPa et une dureté inférieure à 90 unités Shore A, et à une température d'environ -40 degrés Celsius, un module d'Young inférieur à 2000 MPa.

2. Unité optique selon la revendication 1 telle que les fibres optiques sont assemblées en un ou plusieurs rubans (9,11) à l'intérieur de la gaine (3b).

3. Unité optique selon l'une des revendications 1 ou 2 telle que la gaine est réalisée en matériau thermoplastique.

4. Unité optique selon la revendication 3 telle que la gaine est réalisée en polychlorure de vinyle plastifié.

5. Unité optique selon l'une des revendications 1 ou 2 telle que la gaine est réalisée en élastomère.

6. Unité optique selon l'une des revendications 1 à 5 telle que les fibres optiques sont disposées à une distance de la gaine comprise entre 0 et 0,1 mm.

7. Câble de structure de type Unitube ® comprenant une unité optique selon l'une des revendications 1 à 6.

8. Câble de structure de type"stranded loose tube" comprenant au moins une unité optique selon l'une des revendications 1 à 6.

9. Utilisation du câble selon l'une des revendications 7 ou 8 pour des applications télécoms.

## Patentansprüche

1. Optische Einheit (5a, 5b) für ein Kabel (10, 20) mit optischen Fasern, wobei die Einheit eine Vielzahl von optischen Fasern (2) umfasst, welche in einer Hülle (3a, 3b) zusammengefasst sind, **dadurch gekennzeichnet, dass** die Hülle bei einer Umgebungstemperatur von +20 Grad Celsius einen Young-Modul von weniger als 200 MPa und eine Härte von weniger als 90 Shore-A-Härteeinheiten und bei einer Umgebungstemperatur von -40 Grad Celsius einen Young-Modul von weniger als 2000 MPa aufweist.

2. Optische Einheit nach Anspruch 1, wobei die optischen Fasern in dem Inneren der Hülle (3b) in einem oder mehreren Bändern (9, 11) zusammengefügt sind.

3. Optische Einheit nach einem der Ansprüche 1 oder 2, wobei die Hülle aus einem thermoplastischen Material realisiert ist.

4. Optische Einheit nach Anspruch 3, wobei die Hülle aus plastifiziertem Polyvinylchlorid realisiert ist.

5. Optische Einheit nach einem der Ansprüche 1 oder 2, wobei die Hülle aus einem Elastomer realisiert ist.

6. Optische Einheit nach einem der Ansprüche 1-5, wobei die optischen Fasern in einem Abstand von der Hülle angeordnet sind, welcher zwischen 0 und 0,1 mm enthalten ist.

7. Kabel mit einer Struktur vom Unitube®-Typ, umfassend eine optische Einheit nach einem der Ansprüche 1-6.

8. Kabel mit einer Struktur vom "Stranded Loose Tube"-Typ, umfassend wenigstens eine optische Einheit gemäß einem der Ansprüche 1-6.

9. Verwendung des Kabels nach einem der Ansprüche 7 oder 8 für Telekommunikationsanwendungen.

## Claims

1. Optical unit (5a, 5b) for optical fibre cable (10, 20), said unit comprising a plurality of optical fibres (2) grouped within a sheath (3a, 3b), **characterised in that** the sheath has, at a temperature of about +20 degrees Celsius, a Young's modulus of less than 200 MPa and a hardness of less than 90 Shore A units and, at a temperature of about -40 degrees Celsius, a Young's modulus of less than 2000 MPa.

2. Optical unit according to claim 1, wherein the optical fibres are assembled into one or more ribbons (9, 11) inside the sheath (3b).

3. Optical unit according to either claim 1 or claim 2, wherein the sheath is made from thermoplastic material.

4. Optical unit according to claim 3, wherein the sheath is made from plasticised polyvinyl chloride.

5. Optical unit according to either claim 1 or claim 2, wherein the sheath is made from elastomer.

6. Optical unit according to one of claims 1 to 5, wherein the optical fibres are arranged at a distance from the sheath of between 0 and 0.1 mm inclusive.

7. Cable having a Unitube ® type structure and comprising an optical unit according to one of claims 1 to 6.

8. Cable having a stranded loose tube type structure and comprising at least one optical unit according to one of claims 1 to 6.

9. Use of the cable according to either claim 7 or claim 8 for telecom applications.
